# FASCICULE DE BREVET EUROPEEN

(11) **EP 1 530 323 B1**
(45) Date de publication et mention de la délivrance du brevet: **16.05.2007**
(21) Numéro de dépôt: 04292562.8
(22) Date de dépôt: 28.10.2004
(51) Int. Cl.: H04L 12/28

(54) **Procédé d'accès à un système d'Enterprise Resource Planning (ERP) depuis un équipement mobile**
Verfahren zum Zugriff auf ein Enterprise Resource Planning System (ERP) mit Hilfe eines mobilen Gerätes
Method for accessing an Enterprise Resource Planning System (ERP) via a mobile device

(30) Priorité: 04.11.2003 FR 0350783
(43) Date de publication de la demande: 11.05.2005
(73) Titulaire: Bouygues Telecom, 92100 Boulogne Billancourt (FR)
(72) Inventeur: Nivelet, Christophe, Bouygues Telecom, 92100 Boulogne-Billancourt (FR)
(74) Mandataire: Breese, Pierre

(56) Documents cités:
- WO-A-00/56033
- WO-A-02/15604
- US-A1- 2001 051 890
- GNEITING S: "WAP-ANGEBOTE PER HANDY" FUNKSCHAU, FRANZIS-VERLAG K.G. MUNCHEN, DE, vol. 72, no. 8, 1 avril 1999 (1999-04-01), pages 28-32, XP000896767 ISSN: 0016-2841

## Description

La présente invention se rapporte au domaine des Technologies de l'Information et de la Communication.
La présente invention se rapporte plus particulièrement à un procédé d'accès à un module ERP (Enterprise Resource Planning) d'un système d'information depuis un équipement mobile. L'invention se rapporte également à un système pour la mise en oeuvre du procédé.

Depuis les années 1990, les modules ERP sont présents dans de nombreuses grandes entreprises. Ils permettent par exemple de gérer les stocks ou la comptabilité. Des sociétés comme SAP, Oracle ou People Soft commercialisent de tels progiciels. Une telle application apparaît désormais comme une brique technologique essentielle du système d'information d'une grande entreprise.

Un des défis techniques majeurs actuels dans le domaine des progiciels de gestion du type ERP est l'accès en mobilité. Un exemple d'utilisation est l'accès par un responsable commercial en déplacement à l'état des stocks pour un produit donné.

Dans le processus de standardisation de Java (marque déposée) et Sun (JCP ou Java Community Process), il a été présenté une nouvelle JSR (Java Specification Request) : la JSR-172 qui indique comment réaliser depuis un terminal Java (marque déposée) compatible J2ME (marque déposée) des échanges avec une passerelle réseau en utilisant un format XML.
L'art antérieur connaît déjà des solutions qui permettent d'accéder à un ERP depuis un équipement de type PDA (Assistant Personnel Numérique). Une telle application pour PDA a une taille de plusieurs dizaines de Méga-Octets, ce qui est incompatible avec un terminal de télécommunications mobiles possédant des ressources matérielles et logicielles restreintes.

L'art antérieur connaît par exemple la demande américaine US 2001/0051890 décrivant un procédé d'accès distant à une base SAP. Ce procédé suppose l'existence d'un serveur (centre de productivité) générant des requêtes XML vers le système de gestion, et il reçoit les données depuis celui-ci. Un client peut alors s'interfacer avec le serveur pour avoir accès aux données SAP.

L'art antérieur connaît également la demande PCT WO 00/56033 dans laquelle un client léger accède à des données sur un serveur Web distant par le Wap. Une passerelle traduit alors les requêtes du client léger en requête XML pour le serveur Web.

L'art antérieur connaît enfin la demande PCT WO 02/15604 dans laquelle un système de communication de données permet le couplage entre une application distante et un équipement mobile. Des requêtes XML sont alors générées par le système pour l'accès à l'application.

Un extrait de la revue allemande FUNKSCHAU intitulé « WAP-ANGEBOTE PER HANDY » (Vol. 72, n°8, 1er avril 1999) décrit la stabilisation des transmissions d'informations via le WAP sur les téléphones mobiles. Il fait notamment mention d'une éventuelle possibilité de création d'applications « end to end » pour consulter, par exemple, des informations bancaires via une étape préalable d'identification.

La demande internationale de brevet WO-02/15604, la demande de brevet américain US-2001/0051890 A1 et la demande internationale de brevet WO-00/56033 concernent notamment l'importation de données sur des dispositifs mobiles. Les requêtes formulées par un utilisateur d'un dispositif mobile est formulée sous forme XML au niveau des serveurs.

De façon générale, ces documents de l'art antérieur ne permettent pas des traitements locaux des requêtes au niveau de l'équipement mobile. C'est donc un des objets de la présente invention que de fournir une application end-to-end pour l'accès à un ERP distant.

La présente invention entend remédier aux inconvénients de l'art antérieur en proposant une application de taille réduite utilisant la technologie Java (marque déposée par Sun Microsystems).

A cet effet, la présente invention concerne, dans son acception la plus générale, un procédé d'accès à un ERP (Enterprise Resource Planning) depuis un équipement mobile comportant les étapes consistant à :
- télécharger une application Java (marque déposée) sur ledit équipement mobile ;
- émettre au moins une requête vers ledit ERP depuis ledit équipement mobile. Selon l'invention, ladite requête est générée par ladite application java au niveau de l'équipement mobile et elle connait le parcours suivant :
   - acheminement sous un format XML à travers un réseau de télécommunications mobiles vers une passerelle TM - SI [Télécommunications - Système d'Information] ;
   - transmission de ladite requête de la passerelle TM-SI vers ledit ERP via une interface de services Web.

De préférence, le procédé comporte en outre une étape de traitement par l'ERP de ladite requête et le renvoi d'une réponse de l'ERP vers l'équipement mobile, via une interface de services Web.

De préférence, l'équipement mobile est un terminal de télécommunications mobiles compatible Java.
Selon une variante, ladite passerelle TM-SI est une passerelle Wap.
Selon un mode de réalisation, ladite interface de services Web est intégrée audit ERP.
Selon un autre mode de réalisation, ladite interface de services Web n'est pas intégrée audit ERP.

La présente invention est système pour la mise en oeuvre par un système comportant au moins un équipement mobile, une passerelle TM - SI [Télécommunications - Système d'Information], un ERP et une interface de services Web.

On comprendra mieux l'invention à l'aide de la description, faite ci-après à titre purement explicatif, d'un mode de réalisation de l'invention, en référence aux figures annexées :

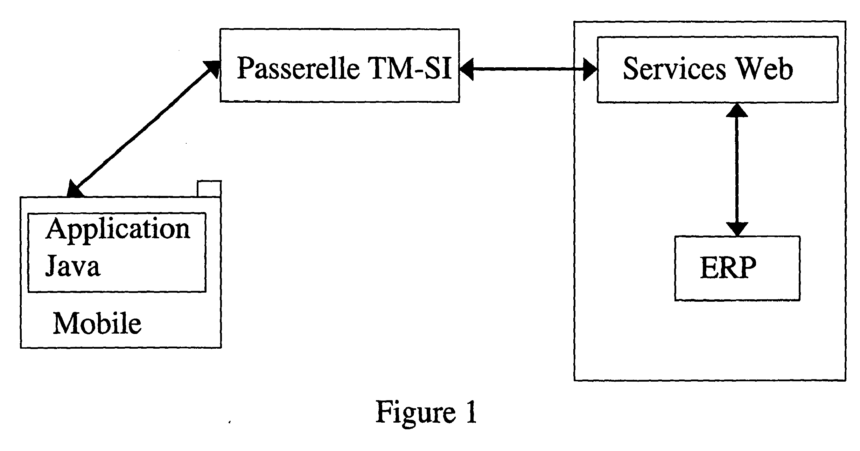

- la figure 1 illustre un système mettant en oeuvre le procédé selon l'invention.

Nous allons décrire un mode de réalisation d'un système mettant en oeuvre le procédé selon l'invention.
Considérons :
1. Un réseau de télécommunications mobiles GSM compatible GPRS comportant une passerelle de type WAP ;
2. Un SI (système d'information d'entreprise) comportant au moins une brique ERP et une brique de services Web.

L'accès à l'ERP par un utilisateur de terminal mobile compatible Java (marque déposée) sera réalisé de la façon suivante :
A) Une application spécifique écrite et compilée en langage informatique Java est téléchargée sur le terminal mobile.
B) L'utilisateur adresse une requête au moyen de ladite application vers ledit ERP.
C) La requête est traduite sous un format basé sur XML (par exemple SOAP) et est transmise à la passerelle Wap à travers le réseau de télécommunications mobiles.
   L'homme du métier mettant en oeuvre le procédé pourra à titre d'exemple utiliser les fonctionnalités définies par la spécification JSR 172 pour la traduction et la transmission de la requête.
D) La requête est ensuite transmise à l'interface de services Web du SI d'entreprise via une connexion.
E) La requête est finalement transmise au sein du SI d'entreprise vers l'ERP.
F) La requête est traitée par l'ERP et une réponse est émise à destination de l'équipement mobile, via le même chemin.

L'invention est décrite dans ce qui précède à titre d'exemple.

## Revendications

1. Procédé d'accès à un module d'Enterprise Resource Planning (ERP) depuis un équipement mobile comportant les étapes consistant à :
• télécharger une application Java sur ledit équipement mobile ;
• émettre au moins une requête vers ledit module d'Enterprise Resource Planning (ERP) depuis ledit équipement mobile ; **caractérisé en ce que** ladite requête est générée par ladite application java au niveau de l'équipement et **en ce qu'**elle connait le parcours suivant :
- acheminement sous un format XML à travers un passerelle (TM - SI) entre le système de télécommunication et le système d'information
- transmission de ladite requête de la passerelle (TM-SI) vers ledit ERP via une interface de services Web.

2. Procédé selon la revendication 1, **caractérisé en ce qu'**il comporte en outre une étape de traitement par le module d'Enterprise Resource Planning (ERP) de ladite requête et le renvoi d'une réponse du module d'Enterprise Resource Planning (ERP) vers l'équipement mobile, via une interface de services Web.

3. Procédé selon la revendication 1 ou 2, **caractérisé en ce que** l'équipement mobile est un terminal de télécommunications mobiles compatible Java.

4. Procédé selon la revendication 1, 2 ou 3, **caractérisé en ce que** ladite passerelle TM-SI est une passerelle Wap.

5. Procédé selon l'une quelconque des revendications 1 à 4, **caractérisé en ce que** ladite interface de services Web est intégrée audit module d'Enterprise Resource Planning (ERP).

6. Procédé selon l'une quelconque des revendications 1 à 4, **caractérisé en ce que** ladite interface de services Web n'est pas intégrée audit module d'Enterprise Resource Planning (ERP).

## Claims

1. Method of accessing an Enterprise Resource Planning (ERP) module from a mobile equipment unit comprising the following steps consisting of:
- downloading a Java application onto said mobile equipment unit;
- transmitting at least one request to said Enterprise Resource Planning (ERP) module from said mobile equipment unit;
**characterised in that** said request is generated by said Java application in the mobile equipment unit and **in that** it is carried out as follows:
- routing in XML format across a mobile telecommunications network to a gateway (TM - IS) between the telecommunications system and the information system;
- transmitting said request from the gateway (TM - IS) to said ERP via a web service interface.

2. Method according to claim 1, **characterised in that** it also comprises a step of the Enterprise Resource Planning (ERP) module processing said request and of sending a response from the Enterprise Resource Planning (ERP) module to the mobile equipment unit, via a web service interface.

3. Method according to claim 1 or 2, **characterised in that** the mobile equipment unit is a Java-compatible mobile telecommunications terminal.

4. Method according to claim 1, 2 or 3, **characterised in that** said TM-IS gateway is a WAP gateway.

5. Method according to any one of the claims from 1 to 4, **characterised in that** said web service interface is integrated in said Enterprise Resource Planning (ERP) module.

6. Method according to any one of the claims from 1 to 4, **characterised in that** said web service interface is not integrated in said Enterprise Resource Planning (ERP) module.

## Patentansprüche

1. Zugangsverfahren zu einem Enterprise Resource Planning-Modul (ERP) ausgehend von einer mobilen Ausrüstung mit den Stufen, die aus Folgendem bestehen:
- Herunterladen einer Java-Anwendung auf die genannte mobile Ausrüstung;
- Ausgabe wenigstens einer Anfrage an das genannte Enterprise Resource Planning-Modul (ERP) ausgehend von der genannten mobilen Ausrüstung; **dadurch gekennzeichnet, dass** die genannte Anfrage durch die genannte Java-Anwendung bei der mobilen Ausrüstung generiert wird und dass sie dem folgenden Verlauf unterzogen wird:
- Verbringung in ein Format XML über ein Netz mobiler Telekommunikation zu einem Netzübergang (TM - SI) zwischen dem Telekommunikationssystem und dem Informationssystem;
- Übertragung der genannten Anfrage vom Netzübergang (TM-SI) zum genannten ERP über eine Schnittstelle für Webdienste.

2. Verfahren gemäß Anspruch 1, **dadurch gekennzeichnet, dass** es darüber hinaus eine Verarbeitungsstufe durch das Enterprise Resource Planning-Modul (ERP) der genannten Anfrage und der Rücksendung einer Antwort des Enterprise Resource Planning-Moduls an die mobile Ausrüstung über eine Schnittstelle für Webdienste umfasst.

3. Verfahren gemäß Anspruch 1 oder 2, **dadurch gekennzeichnet, dass** die mobile Ausrüstung ein mit Java kompatibles Terminal für die mobile Telekommunikation ist.

4. Verfahren gemäß Anspruch 1, 2 oder 3, **dadurch gekennzeichnet, dass** der genannte Netzübergang TM-SI ein Netzübergang Wap ist.

5. Verfahren gemäß Anspruch 1 bis 4, **dadurch gekennzeichnet, dass** die genannte Schnittfläche für Webdienste in das genannte Enterprise Resource Planning-Modul (ERP) integriert ist.

6. Verfahren gemäß Anspruch 1 bis 4, **dadurch gekennzeichnet, dass** die genannte Schnittfläche für Webdienste nicht in das genannte Enterprise Resource Planning-Modul (ERP) integriert ist.
